# EUROPÄISCHE PATENTSCHRIFT

(11) **EP 2 965 560 B1**
(45) Veröffentlichungstag und Bekanntmachung des Hinweises auf die Patenterteilung: **09.08.2017**
(21) Anmeldenummer: 14719189.4
(22) Anmeldetag: 06.03.2014
(51) Int. Cl.: H04W 40/02, H04L 12/841, H04L 12/707, H04L 12/725, H04L 12/721

(54) **VERFAHREN UND NETZWERKINFRASTRUKTUR ZUM REDUNDANTEN ÜBERTRAGEN VON NACHRICHTEN IN EINEM VERTEILTEN ECHTZEITSYSTEM**
METHOD AND NETWORK INFRASTRUCTURE FOR THE REDUNDANT TRANSMISSION OF MESSAGES IN A DISTRIBUTED REAL-TIME SYSTEM
PROCÉDÉ ET INFRASTRUCTURE DE RÉSEAU POUR LA TRANSMISSION REDONDANTE DE MESSAGES DANS UN SYSTÈME EN TEMPS RÉEL DISTRIBUÉ

(30) Priorität: 07.03.2013 AT 501592013; 08.05.2013 AT 503152013
(43) Veröffentlichungstag der Anmeldung: 13.01.2016
(73) Patentinhaber: FTS Computertechnik GmbH, 1040 Wien (AT)
(72) Erfinder: ANGELOW, Harald, A-1140 Wien (AT); STEINER, Wilfried, A-1040 Wien (AT); BAUER, Günther, A-1040 Wien (AT)
(74) Vertreter: Patentanwaltskanzlei Matschnig & Forsthuber OG
(86) Internationale Anmeldenummer: PCT/AT2014/050055
(87) Internationale Veröffentlichungsnummer: WO 2014/134652

(56) Entgegenhaltungen:
- EP-A1- 2 458 825
- WO-A1-03/107609

## Beschreibung

Die Erfindung betrifft ein Verfahren zum redundanten Übertragen von Nachrichten in einem verteilten Echtzeitsystem, wobei das Echtzeitsystem zwei oder mehrere Rechenknoten und einen oder mehrere Sternkoppler umfasst, wobei die Rechenknoten mit den Sternkopplern mittels bi-direktionaler Kommunikationsleitungen verbunden und die Sternkoppler durch bi-direktionale Kommunikationsleitungen miteinander verbunden sind, und wobei die durch die Kommunikationsleitungen verbundenen Sternkoppler eine Netzwerkinfrastruktur bilden, und wobei zumindest ein Teil der Nachrichten redundant versendet wird, und wobei Nachrichten, welche zu einem Nachrichten-Strom gehören, dieselbe Identität aufweisen.

Weiters betrifft die Erfindung eine Netzwerkinfrastruktur für ein verteiltes Echtzeitsystem, wobei das Echtzeitsystem zwei oder mehrere Rechenknoten und einen oder mehrere Sternkoppler umfasst, wobei die Rechenknoten mit den Sternkopplern mittels bi-direktionaler Kommunikationsleitungen verbunden und die Sternkoppler durch bi-direktionale Kommunikationsleitungen miteinander verbunden sind, und wobei die Netzwerkinfrastruktur von den durch die Kommunikationsleitungen verbundenen Sternkoppler gebildet ist, und wobei zumindest ein Teil der Nachrichten redundant versendet wird, und wobei Nachrichten, welche zu einem Nachrichten-Strom gehören, dieselbe Identität aufweisen.

Schließlich betrifft die Erfindung noch ein verteiltes Echtzeitsystem umfassend zwei oder mehrere Rechenknoten und einen oder mehrere Sternkoppler, wobei die Rechenknoten mit den Sternkopplern mittels bi-direktionaler Kommunikationsleitungen verbunden und die Sternkoppler durch bi-direktionale Kommunikationsleitungen miteinander verbunden sind, und wobei von den durch die Kommunikationsleitungen verbundenen Sternkoppler eine Netzwerkinfrastruktur gebildet ist.

Eine Nachricht redundant zu versenden bedeutet dabei, dass von dieser Nachricht zwei oder mehr idente Kopien versendet werden. Sender von Nachrichten können Rechenknoten oder Sternkoppler sein. Ebenso kann der Empfänger einer Nachricht ein Rechenknoten oder ein Sternkoppler sein.

Konkret liegt die Erfindung im Bereich verteilter Echtzeitsysteme, wobei ein solches Echtzeitsystem zwei Arten von aktiven Komponenten umfasst bzw. aus diesen besteht: Rechenknoten und Sternkoppler. Rechenknoten exekutieren Funktionen wie zum Beispiel das Messen von Eigenschaften physikalischer Prozesse mittels geeigneter Sensorik, die Berechnung von Stellgrößen, oder die Aktivierung von Aktuatoren, wie zum Beispiel Ventilen. Rechenknoten sind mit anderen Rechenknoten und/oder Sternkopplern mittels bidirektionaler Leitungen verbunden. Des Weiteren können auch Sternkoppler durch bidirektionale Leitungen miteinander verbunden sein. Der Informationsaustausch zwischen Komponenten funktioniert Nachrichten-orientiert und ohne Einschränkung der Allgemeinheit gehen wir in der folgenden Beschreibung davon aus, dass der Informationsaustausch Ethernet Nachrichten verwendet. Nachrichten können unterschiedliche Identitäten haben und alle Nachrichten mit der gleichen Identität bilden einen "Nachrichten Strom".

Des Weiteren haben einige der Komponenten und möglicherweise alle Komponenten des verteilten Echtzeitsystems Zugriff auf eine globale Zeitbasis. D.h., die Komponenten des verteilten Echtzeitsystems haben lokale Uhren, die zueinander synchronisiert sind. Der maximale Unterschied zweier nicht fehlerhafter Uhren im verteilten Echtzeitsystem kann berechnet werden. Wir bezeichnen diesen maximalen Unterschied als die Präzision der Uhren im verteilten Echtzeitsystem. Typische Werte für die Präzision sind im Bereich von einstelligen Mikrosekunden, können aber durchaus darunter oder darüber liegen.

Die vorliegende Erfindung bezieht sich auf das Management von serieller und paralleler Redundanz in einem solchen verteilten Echtzeitsystem.

Serielle Redundanz implementiert eine Funktionalität, die erst dann ausgeführt wird, wenn das System in einer Fehlersituation ist. D.h., erst wenn Fehler im System passieren, wird die Redundanzfunktion ausgeführt. Ein Szenario der seriellen Redundanz ist das folgende: eine Nachricht eines Nachrichten-Stroms wird entlang einer vordefinierten Route in einem Netzwerk versendet. Wenn diese Route fehlerhaft wird und nicht mehr verfügbar ist, dann wird ein re-routing Algorithmus ausgeführt, der dazu dient, eine alternative Route zu der, jetzt fehlerhaften, Route zu finden. Wird eine solche Route gefunden, dann werden die Nachricht und zukünftige Nachrichten des Nachrichten-Stroms entlang der neuen Route geschickt.

Parallele Redundanz implementiert Funktionalität, die immer, also auch im fehlerfreien Fall ausgeführt wird. D.h., tritt ein Fehler auf, so muss keine zusätzliche Funktionalität ausgeführt werden. In obigem Szenario kann parallele Redundanz derart implementiert werden, dass die Nachrichten eines Nachrichten-Stroms immer über zwei voneinander unabhängigen Routen durch das Netzwerk gesendet werden. Es werden also zwei redundante Kopien der Nachrichten des Nachrichten-Stroms durch das Netzwerk versendet.

Während serielle Redundanz Funktionalität nur im Fehlerfall ausführt, wird bei paralleler Redundanz die Funktionalität immer ausgeführt.

Wird in einem Netzwerk für ein verteiltes Echtzeitcomputersystem parallele Redundanz implementiert (teilweise auch bei serieller Redundanz), so ist Teil der Redundanzfunktionalität eine Funktion, die redundante Kopien einer Nachricht erkennt. Wenn also Information in Form von zwei Kopien entlang zweier Routen im Netzwerk versendet wird, dann muss ein Empfänger der beiden Nachrichten feststellen können, dass es sich bei diesen beiden Nachrichten um Kopien ein und derselben Information handelt. Dieses Problem wird zunehmend komplex in einem System, das Information als Sequenz von Nachrichten versendet. D.h., die Redundanzfunktion muss unterscheiden können zwischen neuer Information und bekannter Information, also, ob es sich zum Beispiel bei empfangenen Nachrichten um unterschiedliche Information oder gleiche Information handelt.

Bestehende Lösungen für Redundanz-Management verwenden häufig Sequenz-Nummern, um dieses Problem zu lösen. Hierbei werden die redundanten Nachrichten, die ein und dieselbe Information beinhalten, mit ein und derselben Nummer versehen, der so genannten Sequenz-Nummer. Die Druckschrift WO03/107609 A1, beschreibt ein Kommunikationsverfahren zur Übertragung von Ethernet-Nachrichten in einem verteilten Echtzeitsystem. Zwischen herkömmlichen Ethernet-Nachrichten (ET-Nachrichten) und zeitgesteuerten Ethernet-Nachrichten (TT-Nachrichten) wird dabei unterschieden, wobei die TT-Nachrichten mit einer a priori bekannten konstanten Verzögerungszeit zwischen Sender und Empfänger transportiert werden, und bei einem zeitlichen Konflikt zwischen ET- und TT-Nachrichten der Transport der in Konflikt stehenden ET-Nachricht verzögert oder abgebrochen wird, um die TT-Nachricht mit der konstanten Verzögerungszeit transportieren zu können.

Wenn neue Information verschickt werden muss, so wird diese Information in redundanten Nachrichten verpackt, die dieselbe Sequenz-Nummer haben und deren Sequenz-Nummer um einen Wert, z.B., eins, höher ist als die Sequenz-Nummer der vorangegangenen redundanten Nachrichten. D.h., ein Empfänger speichert lokal eine Liste der letzten Sequenz-Nummern und akzeptiert eine Nachricht nur dann als neue Information, wenn die Sequenz-Nummer der Nachricht ausreichend unterschiedlich von der letzten empfangenen Sequenz-Nummer ist. Vereinfacht dargestellt heißt das, dass ein Empfänger eine Nachricht als neue Information interpretiert, wenn die Sequenz-Nummer höher ist als die letzte empfangene dieses Typs von Nachricht und die Nachricht verwirft, wenn die Sequenz-Nummer der Nachricht ident ist mit der letzten empfangenen dieser Nachricht. In der Praxis ist dieses vereinfachte Prinzip etwas komplizierter, da Sequenz-Nummern einen Überlauf haben können, d.h., wenn die Sequenz-Nummer einen maximalen Wert erreicht, ist die darauf folgende Sequenz-Nummer ein initialer Wert, z.B. eins. In der Praxis wird außerdem ein Fenster an gültigen Sequenz-Nummern definiert relativ zu der letzten empfangenen Nachricht, die ein Empfänger als neue Information gewertet hat.

Es ist eine Aufgabe der Erfindung, ein Verfahren und unterstützende Hardware anzugeben, mit welcher ein Redundanzservice in einem verteilten Echtzeitcomputersystem gebildet werden kann, um auftretende Hardware-Ausfälle zu tolerieren.

Weiters ist es eine Aufgabe der Erfindung, eine Lösung dafür anzugeben, wie eine Netzwerkinfrastruktur realisiert werden kann, bei welcher die Robustheit gegenüber Störungen durch einen Redundanz-Mechanismus erhöht ist.

Diese Aufgaben werden mit einem eingangs erwähnten Verfahren dadurch gelöst, dass erfindungsgemäß von einem oder mehreren Sternkoppler der Netzwerkinfrastruktur ein oder mehrere Aktivitätsraster ausgeführt werden, wobei ein Aktivitätsraster jeweils aus sich abwechselnden Aktivphasen und Ruhephasen besteht, wobei alle Aktivphasen eines Aktivitätsrasters die gleiche Aktivphasen-Zeitdauer aufweisen, und wobei alle Ruhephasen eines Aktivitätsrasters die gleiche Ruhephasen-Zeitdauer aufweisen, und wobei die Aktivphasen-Zeitdauer und die Ruhephasen-Zeitdauer eines Aktivitätsraster gleich oder unterschiedlich sein können, und wobei von dem oder den Sternkoppler(n) jede Nachricht, welche in der Netzwerkinfrastruktur verschickt wird, entsprechend ihrer Identität genau einem Aktivitätsraster zugeordnet wird, und wobei die Nachrichten nur in Aktivphasen versendet werden, sodass ein Empfänger, welcher Nachrichten empfängt, erkennt, dass es sich um redundante Kopien derselben Nachricht handelt, wenn der Empfänger Nachrichten mit derselben Identität innerhalb eines Zeitintervalls empfängt, welches Zeitintervall eine Zeitdauer aufweist, welche der Aktivphasen-Zeitdauer des Aktivitätsrasters für Nachrichten mit dieser Identität entspricht.

Weiters werden diese Aufgaben mit einer eingangs erwähnten Netzwerkinfrastruktur dadurch gelöst, dass erfindungsgemäß zum redundanten Übertragen von Nachrichten in dem Echtzeitsystem ein oder mehrere Sternkoppler der Netzwerkinfrastruktur dazu eingerichtet ist bzw. eingerichtet sind, ein oder mehrere Aktivitätsraster ausführen, wobei ein Aktivitätsraster aus sich abwechselnden Aktivphasen und Ruhephasen besteht, wobei alle Aktivphasen eines Aktivitätsrasters die gleiche Aktivphasen-Zeitdauer aufweisen, und wobei alle Ruhephasen eines Aktivitätsrasters die gleiche Ruhephasen-Zeitdauer aufweisen, und wobei die Aktivphasen-Zeitdauer und die Ruhephasen-Zeitdauer eines Aktivitätsraster gleich oder unterschiedlich sein können, und wobei der oder die Sternkoppler dazu eingerichtet ist/ sind, jede Nachricht, welche in der Netzwerkinfrastruktur verschickt wird, entsprechend ihrer Identität genau einem Aktivitätsraster zuzuordnen, sodass die Nachrichten nur in Aktivphasen versendet werden, sodass ein Empfänger, welcher Nachrichten empfängt, erkennt, dass es sich um redundante Kopien derselben Nachricht handelt, wenn der Empfänger Nachrichten mit derselben Identität innerhalb eines Zeitintervalls empfängt, welches Zeitintervall eine Zeitdauer aufweist, welche der Aktivphasen-Zeitdauer des Aktivitätsrasters für Nachrichten mit dieser Identität entspricht.

Ebenso werden diese Aufgaben mit einem Echtzeitsystem gelöst, welches eine solche Netzwerkinfrastruktur aufweist.

Das erfindungsgemäße Redundanzservice basiert auf einer neuartigen Verwendung einer so genannten "Sparse Timebase".

Dieser erfindungsgemäße Redundanz-Mechanismus funktioniert auch ohne die Verwendung von Sequenz-Nummern und verwendet eine synchronisierte Zeitbasis, die zumindest Teilen der Netzwerkinfrastruktur zur Verfügung steht. Die synchronisierte Zeitbasis wird als so genannte "Sparse Timebase" verwendet, mittels der ein systemweiter Aktionsraster aufgebaut werden kann. Dieser Aktionsraster besteht aus sich abwechselnden Aktivitätsphasen und Ruhephasen. Da die lokalen Uhren der Komponenten zueinander synchronisiert sind, ist sichergestellt, dass sich die Komponenten "ungefähr" zur gleichen Zeit in denselben Phasen befinden. Die Ungenauigkeit ergibt sich aus der ungenauen Synchronisation der lokalen Uhren zueinander, d.h., es ist sichergestellt, dass, wenn eine nicht fehlerhafte lokale Uhr eine der Phasen beginnt, sich alle anderen Uhren im schlechtesten Fall bereits seit einer Zeitdauer in dieser Phase befinden, die der Präzision entspricht, oder diese Phase erst erreichen wenn eine Zeitdauer verstrichen ist, die der Präzision entspricht. Dieser Aktionsraster kann verwendet werden, um einen Redundanz-Mechanismus zu implementieren, wie in dieser Erfindung geoffenbart. Dabei wird ausgenutzt, dass die Netzwerkinfrastruktur redundante Nachrichten, also Nachrichten, die die gleiche Information beinhalten, nur während der Aktivitätsphase an die Empfänger liefert. Der Empfänger schließt anhand des zeitlich nahen Empfangs der Nachrichten darauf, dass es sich um redundante Nachrichten handelt, die die gleiche Information beinhalten. Die Ruhephase zwischen zwei aufeinander folgenden Aktivitätsphasen ermöglicht es dem Empfänger, zwischen redundanten Nachrichten mit der gleichen Information und Nachrichten mit neuer Information zu unterscheiden.

Die offenbarte Methode und Implementierung kann daher Sequenz-Nummern ersetzen; sie kann aber auch in Kombination mit Sequenz-Nummern verwendet werden. Des Weiteren beschreibt die offenbarte Methode und Implementierung Möglichkeiten, wie die Netzwerkinfrastruktur autonom die Zuverlässigkeit der Nachrichtenübertragung erhöhen kann durch mehrfaches Versenden von Nachrichten und/oder deren redundanten Kopien.

Zweckmäßig ist es, wenn für Nachrichten mit unterschiedlicher Identität unterschiedliche Aktivitätsraster ausgeführt werden.

Ein Empfänger von Nachrichten, insbesondere ein Rechenknoten kann nur ein Teilmenge von Nachrichten, die innerhalb eines Zeitintervalls, das der Länge einer Aktivitätsphase eines Aktivitätsrasters entspricht, verwenden und den Rest der Nachrichten aus diesem Zeitintervall verwerfen. Dies kann beispielsweise in der Hardware konfiguriert. Die Teilmenge kann dabei z.B. genau eine Nachricht einer Mehrzahl an redundanten Nachrichten umfassen, welche weiter verwendet wird, während die anderen zugehörigen redundanten Nachrichten verworfen werden. Die Teilmenge kann aber auch mehrere redundante Nachrichten umfassen, was bedeutet, dass auch zwei oder mehr redundante Nachrichten weiter verwendet werden können.

Weitere vorteilhafte Ausgestaltungen des erfindungsgemäßen Verfahrens und der Netzwerkinfrastruktur bzw. des Echtzeitsystems sind im Folgenden beschrieben.

Bei einer konkreten Ausführungsform der Erfindung kann vorgesehen sein, dass alle Sternkoppler, die ein einer bestimmten Nachricht zugehöriges Aktivitätsraster ausführen, dieses Aktivitätsraster derart ausführen, dass sich die Sternkoppler entweder synchronisiert, d.h., in etwa zeitgleich, oder zeitlich versetzt um eine definierte Phase, in einer Aktivphase oder in einer Ruhephase befinden.

Weiters kann vorgesehen sein, dass ein Sternkoppler eine Nachricht, die er von einem anderen Sternkoppler empfängt, nur dann weiterleitet, wenn der Empfangszeitpunkt und der Zeitpunkt des vollständigen Weiterleitens in eine Aktivphase des zur Nachricht gehörigen Aktivitätsrasters fallen.

Von Vorteil kann es sein, wenn die Länge der Aktivphase in einem Aktivitätsraster einer Nachricht derart gewählt wird, dass sie mindestens der maximal möglichen Dauer des einmaligen Versendens durch die Netzwerkinfrastruktur gewählt wird.

Ebenso kann es zweckmäßig sein, wenn die Länge der Aktivphase in einem Aktivitätsraster einer Nachricht derart gewählt wird, dass sie mindestens dem maximal möglichen zeitlichen Versatz entspricht, den die Kopien einer redundanten Nachricht durch die Netzwerkinfrastruktur auf redundanten Pfaden benötigen.

Günstig kann es auch sein, wenn die Länge der Aktivphase in einem Aktivitätsraster einer Nachricht derart gewählt wird, dass sie mindestens dem maximal möglichen zeitlichen Versatz entspricht den die redundanten Kopien einer Nachricht durch die Netzwerkinfrastruktur auf beiden Richtungen in einem Ring benötigen.

Es kann auch vor Vorteil sein, wenn die Länge der Ruhephase eines Aktivitätsrasters mindestens der Länge der Ungenauigkeit der Synchronisation der lokalen Uhren des verteilten Echtzeitsystems entspricht.

Zweckmäßig kann es sein, wenn die Länge der Ruhephase eines Aktivitätsrasters als eine Funktion der zugehörigen Aktivphase des Aktivitätsrasters gewählt wird.

Dabei hat es sich als günstig erwiesen, wenn die Länge der Ruhephase eines Aktivitätsrasters als ein arithmetisches Vielfaches der zugehörigen Aktivphase des Aktivitätsrasters gewählt wird.

Außerdem kann vorgesehen sein, dass die Länge der Aktivphase in einem Aktivitätsraster einer Nachricht derart gewählt wird, dass sie mindestens der maximal möglichen Dauer des einmaligen Versendens der Nachricht sowie einer konfigurierten Anzahl an Wiederholungen durch die Netzwerkinfrastruktur gewählt wird.

Von Vorteil kann es auch sein, wenn ein Sternkoppler eine Nachricht oder die redundante Kopie einer Nachricht, die er während einer Aktivphase des zugehörigen Aktivitätsrasters empfängt, zwei- oder mehrmals weiterleitet.

Dabei kann es zweckmäßig sein, wenn das wiederholte Weiterleiten der Nachricht nur während der momentanen Aktivphase ausgeführt wird.

Es kann mit Vorteil vorgesehen sein, dass ein definierter zeitlicher Abstand zwischen zwei Wiederholungen vorgesehen ist.

Außerdem kann es von Vorteil sein, wenn die Anzahl der Wiederholungen und/oder der zeitliche Abstand zwischen zwei Wiederholungen konfigurierbar sind.

Es kann auch von Vorteil sein, zum Beispiel um die Gesamtanzahl der Nachrichten im System zu verringern, wenn ein Sternkoppler nur genau eine redundante Kopie weiterleitet von zwei oder mehreren redundanten Kopien einer Nachricht, die der Sternkoppler während einer Aktivphase des zugehörigen Aktivitätsrasters empfängt.

Beispielsweise ist dabei vorgesehen, dass ein Sternkoppler die erste Kopie von der Menge an Kopien einer Nachricht weiterleitet, die er während einer Aktivphase des zugehörigen Aktivitätsrasters empfängt.

Es kann auch vorgesehen sein, dass ein Sternkoppler die letzte Kopie von der Menge an Kopien einer Nachricht weiterleitet, die er während einer Aktivphase des zugehörigen Aktivitätsrasters empfängt.

Weiters kann vorgesehen sein, dass ein Sternkoppler die genau eine Kopie von der Menge an Kopien einer Nachricht zu einem definierten Zeitpunkt in der Aktivphase des zugehörigen Aktivitätsrasters weiterleitet.

Außerdem kann vorgesehen sein, dass ein Sternkoppler die genau eine Kopie von der Menge an Kopien einer Nachricht zu einem konfigurierten bzw. konfigurierbaren Zeitabstand nach Beginn des Empfangs dieser Kopie weiterleitet.

Insbesondere kann dabei vorgesehen sein, dass der konfigurierte Zeitabstand der Dauer entspricht, die der Sternkoppler benötigt um zu entscheiden, zu welchen Rechenknoten und/oder anderen Sternkopplern der Sternkoppler die Nachricht weiterleiten muss, oder der konfigurierte Zeitabstand der Dauer des vollständigen Empfangs der Kopie entspricht.

Um die Fehlertoleranz in der Übertragung zu erhöhen kann ein Sternkoppler auch eine beliebige Teilmenge der redundanten Kopien einer Nachricht weiterleiten.

Wenn die Rechenknoten nicht zu den Sternkopplern synchronisiert sind, dann wird ein Sternkoppler die Nachrichten von einem Rechenknoten auch in einer Ruhephase bekommen.

Es kann dann auch von Vorteil sein, wenn ein oder mehrere Sternkoppler Nachrichten, welche sie direkt von einem Rechenknoten empfangen, verwerfen, wenn die Nachrichten im Sternkoppler während einer der Nachricht zugeordneten Ruhephase empfangen werden.

Es kann auch zweckmäßig sein, wenn ein oder mehrere Sternkoppler Nachrichten, welche sie direkt von einem Rechenknoten empfangen, verwerfen, wenn die Nachricht im Sternkoppler zwar während einer der Nachricht zugeordneten Aktivphase empfangen wird, aber das Weiterleiten dieser Nachricht in dieser Aktivphase nicht abgeschlossen werden kann.

Von Vorteil kann es auch sein, wenn ein oder mehrere Sternkoppler, welche redundante Kopien einer Nachricht direkt von einem Rechenknoten empfangen, untereinander ein Agreement Protocol ausführen, und jeder dieser Sternkoppler für sich in Abhängigkeit dieses Agreement Protocols maximal eine Aktivphase identifiziert, während welcher die eine oder die mehreren redundanten Kopien der Nachricht weitergeleitet werden.

Bei einer Variante der Erfindung ist vorgesehen, dass ein oder mehrere Sternkoppler zwei Gruppen an Kommunikationsleitungen unterscheiden, mit denen er bzw. sie direkt verbunden ist/ sind, wobei der zumindest eine Sternkoppler während einer Aktivphase eines Aktivitätsrasters einer Nachricht die Nachricht nur an die Kommunikationsleitungen der ersten Gruppe weiterleitet und während der Ruhephase eines Aktivitätsrasters einer Nachricht die Nachricht nur an die Kommunikationsleitungen der zweiten Gruppe weiterleitet.

Dabei kann es günstig sein, wenn die Länge der Aktivphase in einem Aktivitätsraster einer Nachricht derart gewählt wird, dass sie zumindest der Dauer entspricht, die eine Nachricht benötigt, um eine definierte Anzahl von Malen, z.B. genau einmal, entlang eines Ringes verschickt zu werden.

"Entlang eines Ringes" bedeutet dabei, dass die Nachricht eine volle Runde zurücklegt.

Grundsätzlich zweckmäßig kann es sein, wenn ein Sternkoppler ein oder mehrere Aktivitätsraster durch lokale Uhren implementiert.

Dabei hat es sich als zweckmäßig erwiesen, dass die lokalen Uhren von unterschiedlichen Sternkopplern, die ein oder mehrere Aktivitätsraster implementieren, zueinander synchronisiert sind.

Im Folgenden ist die Erfindung an Hand der Zeichnung an Hand einer beispielhaften Realisierung näher erörtert. Es zeigt
Fig. 1 ein Beispiel einer Netzwerkinfrastruktur und Rechenknoten, die mittels bi-direktionaler Kommunikationsleitungen mit der Netzwerkinfrastruktur verbunden sind,
Fig. 2 ein Beispiel für eine interne Struktur einer Netzwerkinfrastruktur, bestehend aus Sternkopplern, die mittels bi-direktionaler Kommunikationsleitungen direkt oder indirekt miteinander verbunden sind,
Fig. 3 ein Beispiel, wie Rechenknoten mit der Netzwerkinfrastruktur verbunden werden können,
Fig. 4 ein Beispiel wie Rechenknoten mit der Netzwerkinfrastruktur verbunden werden können,
Fig. 5 ein Beispiel eines Aktionsrasters bestehend aus sich abwechselnden Aktivphasen und Ruhephasen,
Fig. 6 ein Beispiel der Anwendung des Aktionsrasters zum Zweck des Redundanz-Managements bei einer Netzwerkinfrastruktur mit redundanten Pfaden,
Fig. 7 ein Beispiel der Anwendung des Aktionsrasters zum Zwecke des Redundanz-Managements bei einer Netzwerkinfrastruktur mit redundanten Pfaden und wiederholtem Versenden einer Nachricht durch einen Sternkoppler,
Fig. 8 ein Beispiel der Anwendung des Aktionsrasters zum Zweck des Redundanz-Managements bei einer Netzwerkinfrastruktur mit Ring,
Fig. 9 ein Beispiel der Anwendung des Aktionsrasters zum Zweck des Redundanz-Managements bei einer Netzwerkinfrastruktur mit Ring und mehrfacher Zirkulation einer Nachricht im Ring, und
Fig. 10 ein Beispiel der Anwendung des Aktionsrasters zum Zweck des Redundanz-Managements bei einer Netzwerkinfrastruktur mit Ring, wobei lediglich eine redundante Kopie von mehreren redundanten Kopien einer Nachricht weitergeleitet wird.

Das folgende konkrete Beispiel behandelt eine der vielen möglichen Realisierungen des neuen Verfahrens.

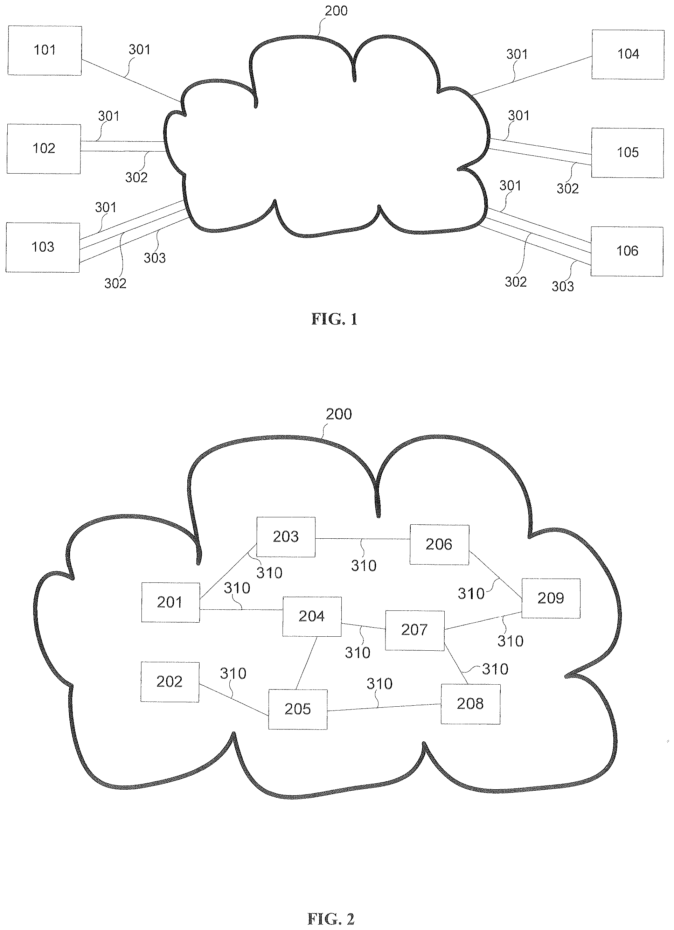

In Fig. 1 ist ein Beispiel einer Netzwerkinfrastruktur 200 und Rechenknoten 101-106, die mittels bi-direktionaler Kommunikationsleitungen 301-303 mit der Netzwerkinfrastruktur 200 verbunden sind, dargestellt. Die Rechenknoten sind in diesem Beispiel mit einer unterschiedlichen Anzahl von Kommunikationsleitungen 301-303 mit der Netzwerkinfrastruktur 200 verbunden: Rechenknoten 101 und 104 sind mit jeweils einer Kommunikationsleitung 301, Rechenknoten 102 und 105 mit jeweils zwei Kommunikationsleitungen 301, 302 und Rechenknoten 103 und 106 sind mit jeweils drei Kommunikationsleitungen 301, 302, 303 mit der Netzwerkinfrastruktur verbunden. Aus der Anzahl der Kommunikationsleitungen 301-303, mit welchen ein Rechenknoten 101-106 mit der Netzwerkinfrastruktur 200 verbunden ist, kann direkt auf die Anzahl der erlaubten fehlerhaften Kommunikationsleitungen und deren Fehlerart geschlossen werden, die auftreten können und trotzdem die Kommunikation der Rechenknoten mit der Netzwerkinfrastruktur aufrecht erhalten bleibt. So können zum Beispiel zwei der Kommunikationsleitungen 301-303, mittels derer Rechenknoten 103 mit der Netzwerkinfrastruktur verbunden ist, ausfallen, und Rechenknoten 103 kann trotzdem über die verbleibende intakte Kommunikationsleitung mit der Netzwerkinfrastruktur kommunizieren (d.h., Nachrichten senden und empfangen).

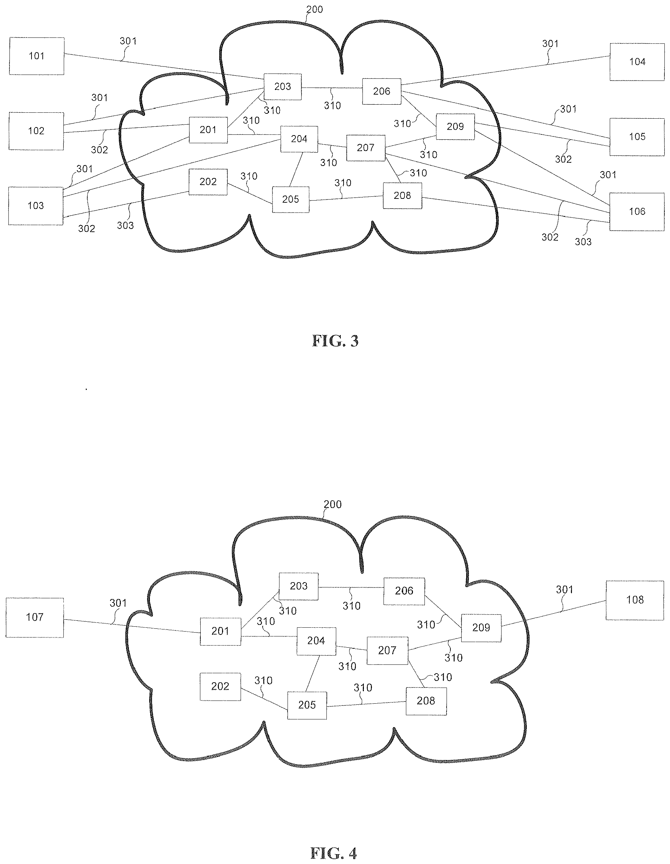

In Fig. 2 ist ein Beispiel für eine interne Struktur einer Netzwerkinfrastruktur, bestehend aus Sternkopplern 201-209, die mittels bi-direktionaler Kommunikationsleitungen 310 direkt oder indirekt miteinander verbunden sind, dargestellt. Die interne Struktur der Netzwerkinfrastruktur 200 ermöglicht "redundante Pfade". So kann zum Beispiel ein Rechenknoten 102 sowohl mit den Sternkopplern 201 und 203 und ein Rechenknoten 105 mit den Sternkopplern 206 und 209 verbunden werden, wie dies in Figur 3 dargestellt ist. Die Netzwerkinfrastruktur ermöglicht in diesem Fall zwischen den Rechenknoten 102 und 105 zwei voneinander unabhängige Pfade: der erste Pfad wird durch die Sternkoppler 203 und 206 gebildet, der zweite Pfad zum Beispiel durch die Sternkoppler 201, 204, 207 und 209. Fallen nun ein oder mehrere Sternkoppler eines Pfades aus, so ist nach wie vor der jeweils andere Pfad intakt und die Rechenknoten 102 und 105 können weiterhin miteinander kommunizieren.

Sternkoppler können durch bi-direktionale Kommunikationsleitungen auch zyklisch miteinander verbunden werden, wie zum Beispiel die Sternkoppler 201, 203, 206, 209, 207, und 204 in Fig. 2 dargestellt. Diese Sternkoppler bilden in einer derartigen Konfiguration einen "Ring".

Im generellen Fall kann ein Sternkoppler Teil von mehreren redundanten Pfaden und mehreren Ringen sein, wie zum Beispiel Sternkoppler 204 und 207 in Fig. 2 dargestellt. In diesem generellen Fall kann ein Sternkoppler dahingehend konfiguriert werden, an welche Kommunikationsleitungen, mit denen er direkt verbunden ist, der Sternkoppler Nachrichten weiterleitet.

In Fig. 3 ist ein Beispiel wie Rechenknoten 101-106 mit der Netzwerkinfrastruktur 200 verbunden werden können dargestellt. Rechenknoten 101 und 104 sind mit jeweils nur einer Kommunikationsleitung 301 mit der Netzwerkinfrastruktur verbunden. Rechenknoten 102 und 105 sind mit jeweils zwei Kommunikationsleitungen 301 und 302 mit der Netzwerkinfrastruktur 200 verbunden. Rechenknoten 102 und 105 können daher über zwei redundante Pfade miteinander kommunizieren. Der erste redundante Pfad kann zum Beispiel die Sternkoppler 203 und 206 beinhalten, der zweite redundante Pfad kann zum Beispiel die Sternkoppler 201, 204 207 und 209 beinhalten. Rechenknoten 103 und 106 sind mit drei Kommunikationsleitungen 301, 302 und 303 mit der Netzwerkinfrastruktur 200 verbunden. Die Rechenknoten 103 und 106 können daher über drei redundante Pfade miteinander kommunizieren. Die redundanten Pfade können zum Beispiel wie folgt konfiguriert werden: der erster redundante Pfad beinhaltet die Sternkoppler 201, 203, 206 und 209; der zweite redundante Pfad beinhaltet die Sternkoppler 204 und 207; der dritte redundante Pfad beinhaltet die Sternkoppler 202, 205 und 208.

In Fig. 4 ist ein Beispiel, wie Rechenknoten 107, 108 mit der Netzwerkinfrastruktur 200 verbunden werden können, dargestellt, wobei die Sternkoppler 201, 203, 206, 209, 207 und 204 als Ring konfiguriert sind. Schickt ein Rechenknoten Nachrichten an einen Sternkoppler, der Teil eines Rings ist, so kann der Sternkoppler die Nachrichten in zwei Richtungen verschicken, z.B. wie in Fig. 2 gezeigt, kann der Sternkoppler 201 die Nachrichten des Rechenknotens 107 sowohl an den Sternkoppler 203 als auch an den Sternkoppler 204 verschicken. Ist nun ein Empfänger dieser Nachricht ebenfalls an einem Sternkoppler des Rings angeschlossen, wie zum Beispiel Rechenknoten 108 an den Sternkoppler 209, so kann ein beliebiger Sternkoppler zwischen den Sternkopplern 201 und 209 ausfallen, und die Nachrichtenübertragung von Rechenknoten 107 zu 108 ist trotzdem garantiert.

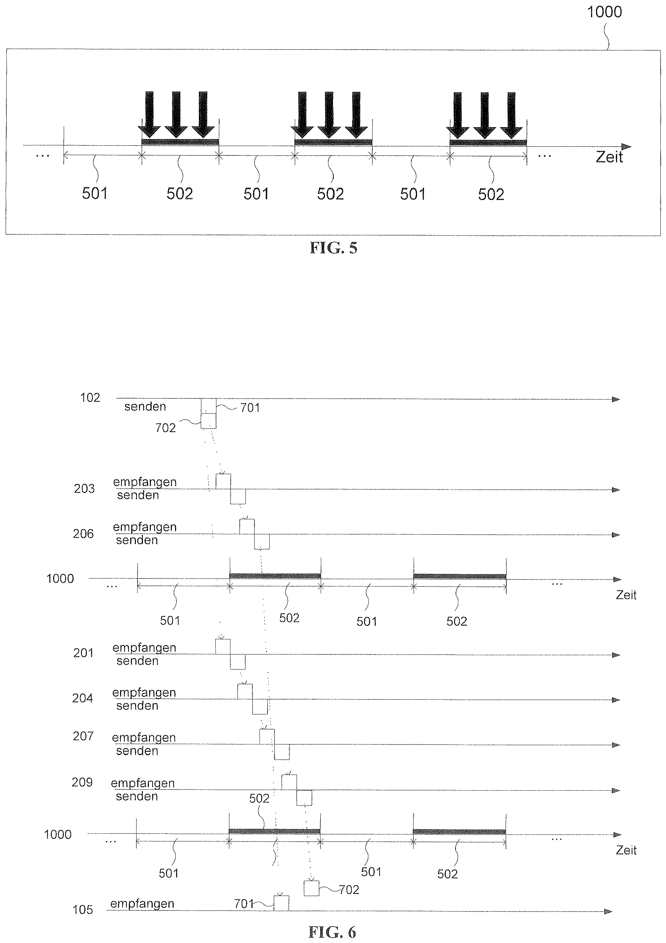

In Fig. 5 ist ein Beispiel eines Aktionsrasters 1000 bestehend aus sich abwechselnden Aktivphasen 502 und Ruhephasen 501 dargestellt. Die Netzwerkinfrastruktur 200 sendet Nachrichten, die redundant übertragen werden, nur in Aktivphasen 502 an die Empfänger. Die Netzwerkinfrastruktur 200 kann genau ein solches Aktivitätsraster verwenden, oder auch mehrere für Nachrichten unterschiedlicher Nachrichten-Ströme. Die Nachrichten eines Nachrichten-Stroms weisen vorzugsweise dieselbe Identität auf, Nachrichten unterschiedlicher Nachrichten-Ströme weisen vorzugsweise unterschiedliche Identität auf. Die Länge der Aktivphasen 502 und der Ruhephasen 501 ergibt sich aus den technischen Übertragungsmöglichkeiten der Netzwerkinfrastruktur, d.h., je schneller und mit je weniger zeitlicher Varianz Nachrichten in der Netzwerkinfrastruktur übertragen werden können, desto kürzer können die Aktivphasen 502 und die Ruhephasen 501 konfiguriert werden. Die Sternkoppler im verteilten Echtzeitsystem exekutieren das oder die Aktionsraster vorzugsweise synchron oder vorzugsweise mit fest definiertem Phasenabstand.

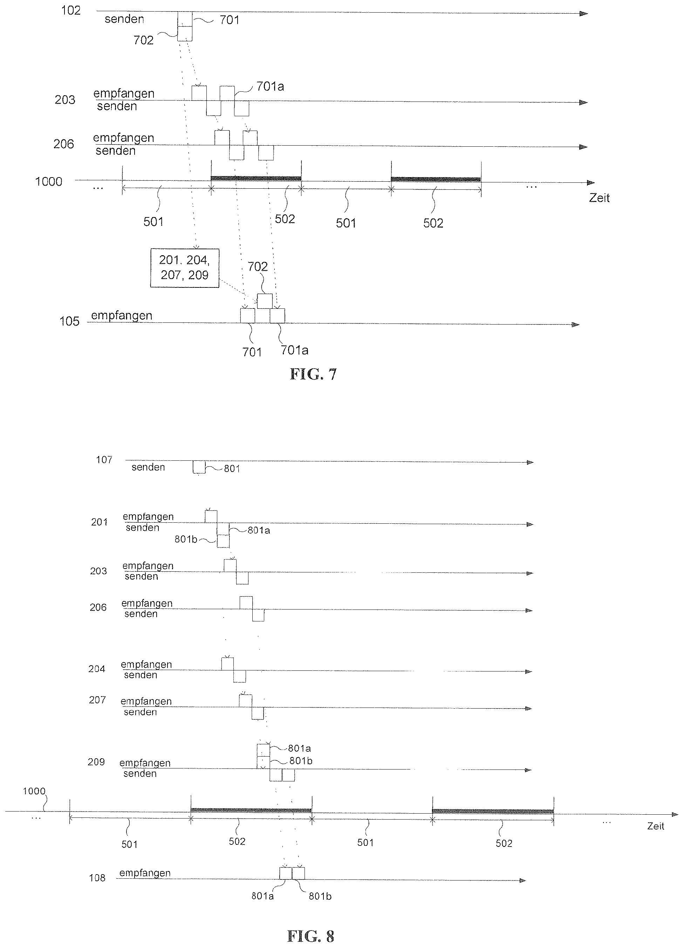

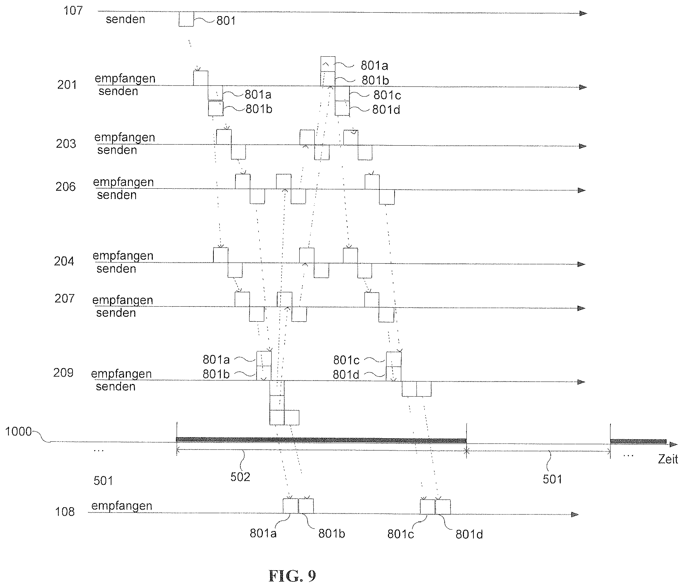

Innerhalb einer Aktivphase 502 kann ein Sternkoppler die Nachricht mehrfach versenden. Ein Beispiel dazu wird im Kontext von Fig. 7 beschrieben. Außerdem können Sternkoppler, die in einem Ring verbunden sind, während einer Aktivphase eine Nachricht mehrfach zirkulieren. Ein Beispiel dazu wird im Kontext von Fig. 9 beschrieben. Ein Sternkoppler, der Nachrichten von einem anderen direkt verbundenen Sternkoppler während einer Ruhephase empfängt, verwirft diese Nachrichten. Ebenso löscht ein Sternkoppler alle jene redundanten Nachrichten aus dem internen Speicher, wenn eine Ruhephase, die mit diesen redundanten Nachrichten assoziiert ist, beginnt. Das Verwerfen von Nachrichten von anderen Sternkopplern führt dazu, dass Nachrichten nicht uneingeschränkt in einem Ring zirkulieren können. Das Löschen der redundanten Nachrichten aus dem internen Speicher eines Sternkopplers führt dazu, dass Nachrichten nicht beliebig oft wieder versendet werden. Nachrichten, die ein Sternkoppler von einem Rechenknoten während einer Ruhephase empfängt, können wahlweise entweder verworfen werden, oder im Sternkoppler gespeichert und in der nächsten Aktivitätsphase verschickt werden. Werden Nachrichten von Rechenknoten, die von Sternkoppler während der Ruhephase empfangen werden, nicht verworfen, und werden solche Nachrichten an Sternkoppler in redundanten Pfaden geschickt, so exekutieren die Sternkoppler ein so genanntes "Agreement Protokoll", um sicherzustellen, dass diese Nachrichten während der gleichen Aktivitätsphase dem Empfänger zugestellt werden.

In Fig. 6 ist ein Beispiel der Anwendung des Aktionsrasters 1000 zum Zweck des Redundanz-Managements bei einer Netzwerkinfrastruktur mit redundanten Pfaden dargestellt. Fig. 6 bezieht sich auf das Beispiel einer Netzwerkinfrastruktur aus Fig. 3 und beschreibt exemplarisch anhand der Kommunikation von Rechenknoten 102 und 105 über zwei redundante Pfade die Anwendung eines Aktionsrasters wie in Fig. 5 abgebildet. Fig. 6 stellt den Fluss der Nachrichten dar, wobei die zeitliche Abfolge von links nach rechts zu interpretieren ist. Das Szenario beginnt mit dem Rechenknoten 102, der zwei Kopien 701, 702 einer redundanten Nachricht verschickt. Nachricht 701 (d.h., Kopie 701 der Nachricht) wird an den Sternkoppler 203 versendet, Nachricht 702 (d.h., Kopie 702 der Nachricht) an den Sternkoppler 201. Im weiteren Verlauf wird die Nachricht 701 von Sternkoppler 203 an Sternkoppler 206 verschickt. Sternkoppler 206 verschickt die Nachricht schließlich an Rechenknoten 105. Die Nachricht 702 wird im weiteren Verlauf von Sternkoppler 201 an Sternkoppler 204, von diesem an Sternkoppler 207 und von diesem an Sternkoppler 209 verschickt. Sternkoppler 209 verschickt die Nachricht schließlich an Rechenknoten 105. In Fig. 6 sind zwei Aktionsraster dargestellt, der obere wird von dem Sternkoppler 206 exekutiert, während der untere von Sternkoppler 209 exekutiert wird.

Wie in Fig. 6 dargestellt und unter Fig. 5 beschrieben, akzeptieren beide Sternkoppler 206 und 209 die Nachricht, da der Empfangszeitpunkt, also der Zeitpunkt, zu dem die Nachricht vollständig empfangen wurde, innerhalb einer Aktivitätsphase liegt. Wie dargestellt sind die Aktivitätsphase 502 und die Ruhephase 501 des Aktivitätsrasters 1000 derart gewählt, dass sichergestellt ist, dass beide Kopien 701, 702 der redundanten Nachricht in ein und derselben Aktivitätsphase an den Rechenknoten 105 verschickt werden. Der Empfänger 105 erkennt, dass die beiden Nachrichten 701, 702 redundant sind.

In Fig. 7 ist ein Beispiel der Anwendung des Aktionsrasters zum Zweck des Redundanz-Managements bei einer Netzwerkinfrastruktur mit redundanten Pfaden und wiederholtem Versenden einer Nachricht durch einen Sternkoppler dargestellt. Das Szenario wie in Fig. 7 gezeigt unterscheidet sich von dem in Fig. 6 gezeigten nur im oberen redundanten Pfad, welcher die Sternkoppler 203 und 206 beinhaltet. Der untere redundante Pfad entspricht der Darstellung in Fig. 6 und wird hier vereinfacht durch das Rechteck beschriftet mit 201, 204, 207, 209 symbolisiert. Im oberen redundanten Pfad wird die Nachricht 701 von Rechenknoten 102 an Sternkoppler 203 und von diesem an Sternkoppler 206 verschickt. Außerdem behält Sternkoppler 203 die Nachricht in seinem lokalen Speicher und versendet sie wieder holt an Sternkoppler 206. In Fig. 7 ist dieses wiederholte Versenden einmalig dargestellt und durch die Nachricht 701a symbolisiert. Fig. 7 zeigt also den speziellen Fall, dass die Nachricht nur einmal wiederholt wird. Im allgemeinen Fall werden pro Nachricht und Aktivphase die Anzahl der Wiederholungen und deren zeitlicher Abstand definiert, ein Anwender kann somit konfigurieren, wie oft die Nachricht wiederholt wird und wie lange der zeitliche Abstand zwischen den einzelnen Wiederholungen sein soll.

Sternkoppler 206 leitet während der Aktivphase alle Kopien der Nachricht an den Rechenknoten 105 weiter. In der Ruhephase die auf die Aktivphase folgt löscht Sternkoppler 203 die Nachricht aus seinem internen Speicher, um ein unbeschränktes Wiederholen des Versendens zu vermeiden.

In Fig. 8 ist ein Beispiel der Anwendung des Aktionsrasters zum Zweck des Redundanz-Managements bei einer Netzwerkinfrastruktur mit Ring dargestellt. Fig. 8 bezieht sich auf das Beispiel einer Netzwerkinfrastruktur in Fig. 4 und beschreibt exemplarisch anhand der Kommunikation von Rechenknoten 107 und 108 über einen Ring die Anwendung eines Aktionsrasters wie in Fig. 5 abgebildet. Wie in Fig. 8 dargestellt schickt der Rechenknoten 107 eine Nachricht an den Sternkoppler 201. Dieser Sternkoppler 201 leitet die Nachricht dann sowohl zum Sternkoppler 203 (symbolisiert als Nachricht 801a) als auch zum Sternkoppler 204 (symbolisiert als Nachricht 801b) weiter. Sternkoppler 203 leitet die Nachricht 801a an Sternkoppler 206 weiter und dieser leitet die Nachricht 801a an den Sternkoppler 209 weiter. Sternkoppler 204 leitet die Nachricht 801b an Sternkoppler 207 weiter und dieser leitet die Nachricht 801b ebenfalls an Sternkoppler 209 weiter. Sternkoppler 209 empfängt also beide redundante Kopien (801a und 801b) der Nachricht 801. Da der Sternkoppler 209 zum Zeitpunkt des Empfanges beider redundanter Kopien (801a und 801b) in einer Aktivphase ist, leitet der Sternkoppler 209 beide Kopien der Nachricht 801 an den Rechenknoten 108 weiter.

In Fig. 9 ist ein Beispiel der Anwendung des Aktionsrasters zum Zweck des Redundanz Managements bei einer Netzwerkinfrastruktur mit Ring und mehrfacher Zirkulation einer Nachricht im Ring dargestellt. Das Szenario in Fig. 9 unterscheidet sich vom Szenario in Fig. 8 dadurch, dass die Aktivphase 502 länger gewählt wurde, sodass eine weitere Zirkulation der Nachricht 801 im Ring möglich ist. D.h., wie in Fig. 9 dargestellt sendet der Sternkoppler 209 die beiden Kopien 801a und 801b der Nachricht 801 nicht nur an den Rechenknoten 108, sondern auch jeweils eine Kopie weiter an die Sternkoppler 207 und 206. Wie dargestellt leiten die Sternkoppler 207 und 206 die Nachrichten an die Sternkoppler 204 und 203 weiter. Die Sternkoppler 204 und 203 leiten ihre Nachrichten an den Sternkoppler 201 weiter. Ab diesem Zeitpunkt wiederholt sich die Sendesequenz ausgehend von Sternkoppler 201 wie zu Beginn des Szenarios. Das Wiederholen der Sequenz wird durch die Nachrichten 801c und 801d symbolisiert. Schlussendlich empfängt der Sternkoppler 209 auch die weiteren redundanten Kopien 801c und 801d der Nachricht 801. Da die Aktivphase lange genug gewählt wurde, leitet der Sternkoppler 209 auch diese beiden Kopien 801c und 801d an den Rechenknoten 108 weiter.

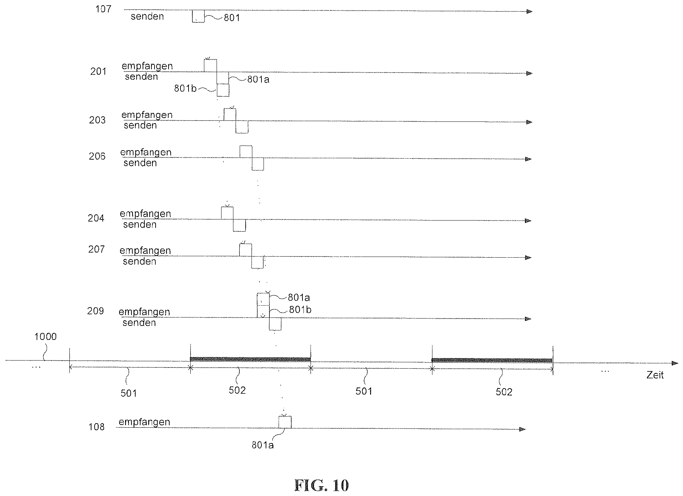

In Fig. 10 ist ein Beispiel der Anwendung des Aktionsrasters zum Zweck des Redundanz-Managements bei einer Netzwerkinfrastruktur mit Ring dargestellt. Fig. 10 bezieht sich auf das Beispiel einer Netzwerkinfrastruktur in Fig. 4 und beschreibt exemplarisch anhand der Kommunikation von Rechenknoten 107 und 108 über einen Ring die Anwendung eines Aktionsrasters wie in Fig. 5 abgebildet. Wie in Fig. 10 dargestellt schickt der Rechenknoten 107 eine Nachricht an den Sternkoppler 201. Dieser Sternkoppler 201 leitet die Nachricht dann sowohl zum Sternkoppler 203 (symbolisiert als Nachricht 801a) als auch zum Sternkoppler 204 (symbolisiert als Nachricht 801b) weiter. Sternkoppler 203 leitet die Nachricht 801a an Sternkoppler 206 weiter und dieser leitet die Nachricht 801a an den Sternkoppler 209 weiter. Sternkoppler 204 leitet die Nachricht 801b an Sternkoppler 207 weiter und dieser leitet die Nachricht 801b ebenfalls an Sternkoppler 209 weiter. Sternkoppler 209 empfängt also beide redundante Kopien (801a und 801b) der Nachricht 801. Da der Sternkoppler 209 zum Zeitpunkt des Empfanges beider redundanter Kopien (801a und 801b) in einer Aktivphase ist, wertet der Sternkoppler 209 die Nachrichten 801a und 801b als redundante Kopien der Nachricht 801 und leitet nur eine Kopien der Nachricht 801, in diesem Fall Kopie 801a an den Rechenknoten 108 weiter.

## Patentansprüche

1. Verfahren zum redundanten Übertragen von Nachrichten in einem verteilten Echtzeitsystem, wobei das Echtzeitsystem zwei oder mehrere Rechenknoten (101-108) und einen oder mehrere Sternkoppler (201-209) umfasst, wobei die Rechenknoten (101-108) mit den Sternkopplern (201-209) mittels bi-direktionaler Kommunikationsleitungen (301, 302, 303) verbunden und die Sternkoppler (201-209) durch bi-direktionale Kommunikationsleitungen (310) miteinander verbunden sind, und wobei die durch die Kommunikationsleitungen (310) verbundenen Sternkoppler (201-209) eine Netzwerkinfrastruktur (200) bilden, und wobei zumindest ein Teil der Nachrichten redundant versendet wird, und wobei Nachrichten, welche zu einem Nachrichten-Strom gehören, dieselbe Identität aufweisen, wobei
von einem oder mehreren Sternkoppler (201-209) der Netzwerkinfrastruktur (200) ein oder mehrere Aktivitätsraster (1000) ausgeführt werden, wobei ein Aktivitätsraster (1000) jeweils aus sich abwechselnden Aktivphasen (502) und Ruhephasen (501) besteht, wobei alle Aktivphasen eines Aktivitätsrasters die gleiche Aktivphasen-Zeitdauer aufweisen, und wobei alle Ruhephasen eines Aktivitätsrasters die gleiche Ruhephasen-Zeitdauer aufweisen, und wobei die Aktivphasen-Zeitdauer und die Ruhephasen-Zeitdauer eines Aktivitätsraster gleich oder unterschiedlich sein können, und **dadurch gekennzeichnet, dass** von dem oder den Sternkoppler(n) jede Nachricht, welche in der Netzwerkinfrastruktur verschickt wird, entsprechend ihrer Identität genau einem Aktivitätsraster (1000) zugeordnet wird, und wobei die Nachrichten nur in Aktivphasen (502) versendet werden, sodass ein Empfänger, welcher Nachrichten empfängt, erkennt, dass es sich um redundante Kopien derselben Nachricht handelt, wenn der Empfänger Nachrichten mit derselben Identität innerhalb eines Zeitintervalls empfängt, welches Zeitintervall eine Zeitdauer aufweist, welche der Aktivphasen-Zeitdauer des Aktivitätsrasters (1000) für Nachrichten mit dieser Identität entspricht.

2. Verfahren nach Anspruch 1, **dadurch gekennzeichnet, dass** alle Sternkoppler (201-209), die ein einer bestimmten Nachricht zugehöriges Aktivitätsraster (1000) ausführen, dieses Aktivitätsraster (1000) derart ausführen, dass sich die Sternkoppler (201-209) entweder synchronisiert, d.h., in etwa zeitgleich, oder zeitlich versetzt um eine definierte Phase, in einer Aktivphase (502) oder in einer Ruhephase (501) befinden.

3. Verfahren nach Anspruch 1 oder 2, **dadurch gekennzeichnet, dass** ein Sternkoppler (201-209) eine Nachricht, die er von einem anderen Sternkoppler (201-209) empfängt, nur dann weiterleitet, wenn der Empfangszeitpunkt und der Zeitpunkt des vollständigen Weiterleitens in eine Aktivphase (502) des zur Nachricht gehörigen Aktivitätsrasters (1000) fallen.

4. Verfahren nach einem der Ansprüche 1 bis 3, **dadurch gekennzeichnet, dass** die Länge der Aktivphase (502) in einem Aktivitätsraster (1000) einer Nachricht derart gewählt wird, dass sie mindestens der maximal möglichen Dauer des einmaligen Versendens durch die Netzwerkinfrastruktur (200) gewählt wird.

5. Verfahren nach einem der Ansprüche 1 bis 4, **dadurch gekennzeichnet, dass** die Länge der Aktivphase (502) in einem Aktivitätsraster (1000) einer Nachricht derart gewählt wird, dass sie mindestens dem maximal möglichen zeitlichen Versatz entspricht, den die Kopien (701, 702) einer redundanten Nachricht durch die Netzwerkinfrastruktur auf redundanten Pfaden (203, 206; 201, 204, 207, 209) benötigen, oder die Länge der Aktivphase (502) in einem Aktivitätsraster (1000) einer Nachricht derart gewählt wird, dass sie mindestens dem maximal möglichen zeitlichen Versatz entspricht den die redundanten Kopien (801a, 801b) einer Nachricht durch die Netzwerkinfrastruktur auf beiden Richtungen in einem Ring (201, 203, 206, 209; 201, 204, 207, 209) benötigen.

6. Verfahren nach einem der Ansprüche 1 bis 5, **dadurch gekennzeichnet, dass** die Länge der Ruhephase (501) eines Aktivitätsrasters (1000) mindestens der Länge der Ungenauigkeit der Synchronisation der lokalen Uhren des verteilten Echtzeitsystems entspricht.

7. Verfahren nach einem der Ansprüche 1 bis 6, **dadurch gekennzeichnet, dass** die Länge der Ruhephase (501) eines Aktivitätsrasters (1000) als eine Funktion der zugehörigen Aktivphase (502) des Aktivitätsrasters (1000) gewählt wird, wobei vorzugsweise die Länge der Ruhephase (501) eines Aktivitätsrasters (1000) als ein arithmetisches Vielfaches der zugehörigen Aktivphase (502) des Aktivitätsrasters (1000) gewählt wird.

8. Verfahren nach einem der Ansprüche 4 bis 7, **dadurch gekennzeichnet, dass** die Länge der Aktivphase (502) in einem Aktivitätsraster (1000) einer Nachricht derart gewählt wird, dass sie mindestens der maximal möglichen Dauer des einmaligen Versendens der Nachricht sowie einer konfigurierten Anzahl an Wiederholungen durch die Netzwerkinfrastruktur (200) gewählt wird.

9. Verfahren nach einem der Ansprüche 1 bis 8, **dadurch gekennzeichnet, dass** ein Sternkoppler (201-209) eine Nachricht oder die redundante Kopie einer Nachricht, die er während einer Aktivphase (502) des zugehörigen Aktivitätsrasters (1000) empfängt, zwei-oder mehrmals weiterleitet, wobei vorzugsweise das wiederholte Weiterleiten der Nachricht nur während der momentanen Aktivphase (502) ausgeführt wird, und wobei insbesondere ein definierter zeitlicher Abstand zwischen zwei Wiederholungen vorgesehen ist.

10. Verfahren nach Anspruch 9, **dadurch gekennzeichnet, dass** die Anzahl der Wiederholungen und/oder der zeitliche Abstand zwischen zwei Wiederholungen konfigurierbar sind.

11. Verfahren nach einem der Ansprüche 1 bis 10, **dadurch gekennzeichnet, dass** ein Sternkoppler (201-209) genau eine Kopie von der Menge an Kopien einer Nachricht weiterleitet, die er während einer Aktivphase (502) des zugehörigen Aktivitätsrasters (1000) empfängt, wobei vorzugsweise ein Sternkoppler (201-209) die erste Kopie von der Menge an Kopien einer Nachricht weiterleitet, die er während einer Aktivphase (502) des zugehörigen Aktivitätsrasters (1000) empfängt, und wobei vorzugsweise
-) ein Sternkoppler (201-209) die letzte Kopie von der Menge an Kopien einer Nachricht weiterleitet, die er während einer Aktivphase (502) des zugehörigen Aktivitätsrasters (1000) empfängt, oder
-) ein Sternkoppler (201-209) die genau eine Kopie von der Menge an Kopien einer Nachricht zu einem konfigurierten bzw. konfigurierbaren Zeitpunkt in der Aktivphase (502) des zugehörigen Aktivitätsrasters (1000) weiterleitet, oder
-) ein Sternkoppler (201-209) die genau eine Kopie von der Menge an Kopien einer Nachricht zu einem konfigurierten bzw. konfigurierbaren Zeitabstand nach Beginn des Empfangs dieser Kopie weiterleitet.

12. Verfahren nach Anspruch 11, **dadurch gekennzeichnet, dass** der Zeitabstand der Dauer entspricht, die der Sternkoppler (201-209) benötigt um zu entscheiden, zu welchen Rechenknoten und/oder anderen Sternkopplem der Sternkoppler (201-209) die Nachricht weiterleiten muss, oder der Zeitabstand der Dauer des vollständigen Empfangs der Kopie entspricht.

13. Verfahren nach einem der Ansprüche 1 bis 12, **dadurch gekennzeichnet, dass** ein Sternkoppler (201-209) eine beliebige Teilmenge der Kopien von der Menge an Kopien einer Nachricht weiterleitet, die er während einer Aktivphase (502) des zugehörigen Aktivitätsrasters (1000) empfängt.

14. Verfahren nach einem der Ansprüche 1 bis 13, **dadurch gekennzeichnet dass** ein oder mehrere Sternkoppler Nachrichten, welche sie direkt von einem Rechenknoten empfangen, verwerfen, wenn die Nachrichten im Sternkoppler während einer der Nachricht zugeordneten Ruhephase empfangen werden.

15. Verfahren nach einem der Ansprüche 1 bis 14, **dadurch gekennzeichnet dass** ein oder mehrere Sternkoppler Nachrichten, welche sie direkt von einem Rechenknoten empfangen, verwerfen, wenn die Nachricht im Sternkoppler zwar während einer der Nachricht zugeordneten Aktivphase empfangen wird, aber das Weiterleiten dieser Nachricht in dieser Aktivphase nicht abgeschlossen werden kann.

16. Verfahren nach einem der Ansprüche 1 bis 15, **dadurch gekennzeichnet dass** ein oder mehrere Sternkoppler, welche redundante Kopien einer Nachricht direkt von einem Rechenknoten empfangen, untereinander ein Agreement Protocol ausführen, und jeder dieser Sternkoppler für sich in Abhängigkeit dieses Agreement Protocols maximal eine Aktivphase identifiziert, während welcher die eine oder die mehreren redundanten Kopien der Nachricht weitergeleitet werden.

17. Verfahren nach einem der Ansprüche 1 bis 16, **dadurch gekennzeichnet, dass** ein oder mehrere Sternkoppler zwei Gruppen an Kommunikationsleitungen (310; 301, 302, 303) unterscheiden, mit denen er bzw. sie direkt verbunden ist/sind, wobei der zumindest eine Sternkoppler während einer Aktivphase (502) eines Aktivitätsrasters (1000) einer Nachricht die Nachricht nur an die Kommunikationsleitungen der ersten Gruppe weiterleitet und während der Ruhephase (501) eines Aktivitätsrasters (1000) einer Nachricht die Nachricht nur an die Kommunikationsleitungen der zweiten Gruppe weiterleitet, wobei vorzugsweise die Länge der Aktivphase (502) in einem Aktivitätsraster (1000) einer Nachricht derart gewählt wird, dass sie zumindest der Dauer entspricht, die eine Nachricht benötigt, um eine definierte Anzahl von Malen, z.B. genau einmal, entlang eines Ringes verschickt zu werden.

18. Verfahren nach einem der Ansprüche 1 bis 17, **dadurch gekennzeichnet, dass** ein Sternkoppler (201-209) ein oder mehrere Aktivitätsraster (1000) durch lokale Uhren implementiert, wobei vorzugsweise die lokalen Uhren von unterschiedlichen Sternkopplern (201-209), die ein oder mehrere Aktivitätsraster (1000) implementieren, zueinander synchronisiert sind.

19. Netzwerkinfrastruktur (200) für ein verteiltes Echtzeitsystem, wobei das Echtzeitsystem zwei oder mehrere Rechenknoten (101-108) und einen oder mehrere Sternkoppler (201-209) umfasst, wobei die Rechenknoten (101-108) mit den Sternkopplern (201-209) mittels bi-direktionaler Kommunikationsleitungen (301, 302, 303) verbunden und die Sternkoppler (201-209) durch bi-direktionale Kommunikationsleitungen (310) miteinander verbunden sind, und wobei die Netzwerkinfrastruktur von den durch die Kommunikationsleitungen (310) verbundenen Sternkoppler (201-209) gebildet ist, und wobei zumindest ein Teil der Nachrichten redundant versendet wird, und wobei Nachrichten, welche zu einem Nachrichten-Strom gehören, dieselbe Identität aufweisen, wobei zum redundanten Übertragen von Nachrichten in dem Echtzeitsystem ein oder mehrere Sternkoppler (201-209) der Netzwerkinfrastruktur (200) dazu eingerichtet ist bzw. eingerichtet sind, ein oder mehrere Aktivitätsraster (1000) ausführen, wobei ein Aktivitätsraster (1000) aus sich abwechselnden Aktivphasen (502) und Ruhephasen (501) besteht, wobei alle Aktivphasen eines Aktivitätsrasters die gleiche Aktivphasen-Zeitdauer aufweisen, und wobei alle Ruhephasen eines Aktivitätsrasters die gleiche Ruhephasen-Zeitdauer aufweisen, und wobei die Aktivphasen-Zeitdauer und die Ruhephasen-Zeitdauer eines Aktivitätsraster gleich oder unterschiedlich sein können, und **dadurch gekennzeichnet, dass** der oder die Sternkoppler dazu eingerichtet ist/sind, jede Nachricht, welche in der Netzwerkinfrastruktur verschickt wird, entsprechend ihrer Identität genau einem Aktivitätsraster (1000) zuzuordnen, sodass die Nachrichten nur in Aktivphasen (502) versendet werden, sodass ein Empfänger, welcher Nachrichten empfängt, erkennt, dass es sich um redundante Kopien derselben Nachricht handelt, wenn der Empfänger Nachrichten mit derselben Identität innerhalb eines Zeitintervalls empfängt, welches Zeitintervall eine Zeitdauer aufweist, welche der Aktivphasen-Zeitdauer des Aktivitätsrasters (1000) für Nachrichten mit dieser Identität entspricht.

20. Netzwerkinfrastruktur nach Anspruch 19, **dadurch gekennzeichnet, dass** alle Sternkoppler (201-209), die ein einer bestimmten Nachricht zugehöriges Aktivitätsraster (1000) ausführen, dieses Aktivitätsraster (1000) derart ausführen, dass sich die Sternkoppler (201-209) entweder synchronisiert, d.h., in etwa zeitgleich, oder zeitlich versetzt um eine definierte Phase, in einer Aktivphase (502) oder in einer Ruhephase (501) befinden.

21. Netzwerkinfrastruktur nach Anspruch 19 oder 20, **dadurch gekennzeichnet, dass** ein Sternkoppler (201-209) eine Nachricht, die er von einem anderen Sternkoppler (201-209) empfängt, nur dann weiterleitet, wenn der Empfangszeitpunkt und der Zeitpunkt des vollständigen Weiterleitens in eine Aktivphase (502) des zur Nachricht gehörigen Aktivitätsrasters (1000) fallen.

22. Netzwerkinfrastruktur nach einem der Ansprüche 19 bis 21, **dadurch gekennzeichnet, dass** die Länge der Aktivphase (502) in einem Aktivitätsraster (1000) einer Nachricht derart gewählt wird, dass sie mindestens der maximal möglichen Dauer des einmaligen Versendens durch die Netzwerkinfrastruktur (200) gewählt wird.

23. Netzwerkinfrastruktur nach einem der Ansprüche 19 bis 22, **dadurch gekennzeichnet, dass** die Länge der Aktivphase (502) in einem Aktivitätsraster (1000) einer Nachricht derart gewählt wird, dass sie mindestens dem maximal möglichen zeitlichen Versatz entspricht, den die Kopien (701, 702) einer redundanten Nachricht durch die Netzwerkinfrastruktur auf redundanten Pfaden (203, 206; 201, 204, 207, 209) benötigen, oder die Länge der Aktivphase (502) in einem Aktivitätsraster (1000) einer Nachricht derart gewählt wird, dass sie mindestens dem maximal möglichen zeitlichen Versatz entspricht den die redundanten Kopien (801a, 801b) einer Nachricht durch die Netzwerkinfrastruktur auf beiden Richtungen in einem Ring (201, 203, 206, 209; 201, 204, 207, 209) benötigen.

24. Netzwerkinfrastruktur nach einem der Ansprüche 19 bis 23, **dadurch gekennzeichnet, dass** ein Sternkoppler (201-209) genau eine Kopie von der Menge an Kopien einer Nachricht weiterleitet, die er während einer Aktivphase (502) des zugehörigen Aktivitätsrasters (1000) empfängt, wobei vorzugsweise ein Sternkoppler (201-209) die erste Kopie von der Menge an Kopien einer Nachricht weiterleitet, die er während einer Aktivphase (502) des zugehörigen Aktivitätsrasters (1000) empfängt, und wobei vorzugsweise
-) ein Sternkoppler (201-209) die letzte Kopie von der Menge an Kopien einer Nachricht weiterleitet, die er während einer Aktivphase (502) des zugehörigen Aktivitätsrasters (1000) empfängt, oder
-) ein Sternkoppler (201-209) die genau eine Kopie von der Menge an Kopien einer Nachricht zu einem definierten Zeitpunkt in der Aktivphase (502) des zugehörigen Aktivitätsrasters (1000) weiterleitet, oder
-) ein Sternkoppler (201-209) die genau eine Kopie von der Menge an Kopien einer Nachricht zu einem konfigurierten bzw. konfigurierbaren Zeitabstand nach Beginn des Empfangs dieser Kopie weiterleitet.

25. Netzwerkinfrastruktur nach einem der Ansprüche 19 bis 24, **dadurch gekennzeichnet, dass** ein oder mehrere Sternkoppler zwei Gruppen an Kommunikationsleitungen (310; 301, 302, 303) unterscheiden, mit denen er bzw. sie direkt verbunden ist/sind, wobei der zumindest eine Sternkoppler während einer Aktivphase (502) eines Aktivitätsrasters (1000) einer Nachricht die Nachricht nur an die Kommunikationsleitungen der ersten Gruppe weiterleitet und während der Ruhephase (501) eines Aktivitätsrasters (1000) einer Nachricht die Nachricht nur an die Kommunikationsleitungen der zweiten Gruppe weiterleitet, wobei vorzugsweise die Länge der Aktivphase (502) in einem Aktivitätsraster (1000) einer Nachricht derart gewählt wird, dass sie zumindest der Dauer entspricht, die eine Nachricht benötigt, um eine definierte Anzahl von Malen, z.B. genau einmal, entlang eines Ringes verschickt zu werden.

26. Netzwerkinfrastruktur nach einem der Ansprüche 19 bis 25, **dadurch gekennzeichnet, dass** ein Sternkoppler (201-209) ein oder mehrere Aktivitätsraster (1000) durch lokale Uhren implementiert, wobei vorzugsweise die lokalen Uhren von unterschiedlichen Sternkopplern (201-209), die ein oder mehrere Aktivitätsraster (1000) implementieren, zueinander synchronisiert sind.

27. Verteiltes Echtzeitsystem umfassend zwei oder mehrere Rechenknoten (101-108) und einen oder mehrere Sternkoppler (201-209), wobei die Rechenknoten (101-108) mit den Sternkopplern (201-209) mittels bi-direktionaler Kommunikationsleitungen (301, 302, 303) verbunden und die Sternkoppler (201-209) durch bi-direktionale Kommunikationsleitungen (310) miteinander verbunden sind, und wobei von den durch die Kommunikationsleitungen (310) verbundenen Sternkoppler (201-209) eine Netzwerkinfrastruktur (200) gebildet ist,
**dadurch gekennzeichnet, dass**
zum redundanten Übertragen von Nachrichten die Netzwerkinfrastruktur (200) nach einem der Ansprüche 19 bis 26 ausgebildet ist.

## Claims

1. Method for the redundant transmission of messages in a distributed real-time system, wherein the real-time system comprises two or more computing nodes (101-108) and one or more star couplers (201-209), wherein the computing nodes (101-108) are connected to the star couplers (201-209) by means of bidirectional communication lines (301, 302, 303) and the star couplers (201-209) are connected to one another by bidirectional communication lines (310), and wherein the star couplers (201-209) connected by the communication lines (310) form a network infrastructure (200), and wherein at least some of the messages are sent redundantly, and wherein messages belonging to a message stream have the same identity, wherein one or more activity rasters (1000) are performed by one or more star couplers (201-209) of the network infrastructure (200), wherein an activity raster (1000) in each case consists of alternating active phases (502) and rest phases (501), wherein all active phases of an activity raster have the same active phase duration, and wherein all rest phases of an activity raster have the same rest phase duration, and wherein the active phase duration and the rest phase duration of an activity raster may be identical or different, **characterized in that** each message sent in the network infrastructure is assigned, depending on its identity, to precisely one activity raster (1000) by the star coupler(s), and wherein the messages are sent only in active phases (502) so that a receiver receiving messages detects that the messages are redundant copies of the same message if the receiver receives messages with the same identity within a time interval, which time interval has a duration corresponding to the active phase duration of the activity raster (1000) for messages having this identity.

2. Method according to claim 1, **characterized in that** all star couplers (201-209) performing an activity :raster (1000) associated with a certain message perform this activity raster (1000) in such a way that the star couplers (201-209) are in an active phase (502) or in a rest phase (501) either in a synchronized manner, that is to say at approximately the same time, or in a manner temporally offset by a defined phase.

3. Method according to claim 1 or 2, **characterized in that** a star coupler (201-209) forwards a message that it receives from another star coupler (201-209) only when the moment of receipt and the moment of complete forwarding fall in an active phase (502) of the activity raster (1000) belonging to the message.

4. Method according to any of claims 1 to 3, **characterized in that** the length of the active phase (502) in an activity raster (1000) of a message is selected such that it is selected to be at least the maximum possible duration of one-time sending through the network infrastructure (200).

5. Method according to any of claims 1 to 4, **characterized in that** the length of the active phase (502) in an activity raster (1000) of a message is selected such that it corresponds at least to the maximum possible temporal offset required by the copies (701, 702) of a redundant message through the network infrastructure over redundant paths (203, 206; 201, 204, 207, 209), or the length of the active phase (502) in an activity raster (1000) of a message is selected such that it corresponds at least to the maximum possible temporal offset required by the redundant copies (801a, 801b) of a message through the network infrastructure in both directions in a ring (201, 203, 206, 209; 201, 204, 207, 209).

6. Method according to any of claims 1 to 5, **characterized in that** the length of the rest phase (501) of an activity raster (1000) corresponds at least to the length of the inaccuracy of the synchronization of the local clocks of the distributed real-time system.

7. Method according to any of claims 1 to 6, **characterized in that** the length of the rest phase (501) of an activity raster (1000) is selected as a function of the associated active phase (502) of the activity raster (1000), wherein preferably the length of the rest phase (501) of an activity raster (1000) is selected as an arithmetic multiple of the associated active phase (502) of the activity raster (1000).

8. Method according to any of claims 4 to 7, **characterized in that** the length of the active phase (502) in an activity raster (1000) of a message is selected such that it is selected to be at least the maximum possible duration of the one-time sending of the message and also of a configured number of repetitions through the network infrastructure (200).

9. Method according to any of claims 1 to 8, **characterized in that** a star coupler (201-209) forwards, two or more times, a message or the redundant copy of a message that it receives during an active phase (502) of the associated activity raster (1000), wherein preferably the repeated forwarding of the message is performed only during the current active phase (502), and wherein in particular a defined time interval is provided between two repetitions.

10. Method according to claim 9, **characterized in that** the number of repetitions and/or the time interval between two repetitions can be configured.

11. Method according to any of claims 1 to 10, **characterized in that** a star coupler (201-209) forwards precisely one copy of the set of copies of a message that it receives during an active phase (502) of the associated activity raster (1000), wherein preferably a star coupler (201-209) forwards the first copy of the set of copies of a message that it receives during an active phase (502) of the associated activity raster (1000), and wherein preferably
-) a star coupler (201-209) forwards the last copy of the set of copies of a message that it receives during an active phase (502) of the associated activity raster (1000), or
-) a star coupler (201-209) forwards the precisely one copy of the set of copies of a message at a configured or configurable moment in the active phase (502) of the associated activity raster (1000), or
-) a star coupler (201-209) forwards the precisely one copy of the set of copies of a message at a configured or configurable time interval following the start of receipt of this copy.

12. Method according to claim 11, **characterized in that** the time interval corresponds to the time required by the star coupler (201-209) to decide to which computing nodes and/or other star couplers the star coupler (201-209) must forward the message, or the time interval corresponds to the time required for complete receipt of the copy.

13. Method according to any of claims 1 to 12, **characterized in that** a star coupler (201-209) forwards any subset of copies from the set of copies of a message that it receives during an active phase (502) of the associated activity raster (1000).

14. Method according to any of claims 1 to 13, **characterized in that** one or more star couplers reject messages that they receive directly from a computing node if the messages are received in the star coupler during a rest phase associated with the message.

15. Method according to any of claims 1 to 14, **characterized in that** one or more star couplers reject messages that they receive directly from a computing node if the message is received in the star coupler during an active phase associated with the message but the forwarding of said message cannot be completed in this active phase.

16. Method according to any of claims 1 to 15, **characterized in that** one or more star couplers that receive redundant copies of a message directly from a computing node together carry out an agreement protocol, and each of these star couplers separately identifies, in accordance with this agreement protocol, at most one active phase during which the one or more redundant copies of the message will be forwarded.

17. Method according to any of claims 1 to 16, **characterized in that** one or more star couplers distinguish between two groups of communication lines (310; 301, 302, 303) to which it or they is/are directly connected, wherein the least one star coupler during an active phase (502) of an activity raster (1000) of a message forwards the message only on the communication lines of the first group and during the rest phase (501) of an activity raster (1000) of a message forwards the message only on the communication lines of the second group, wherein preferably the length of the active phase (502) in an activity raster (1000) of a message is selected such that it corresponds at least to the time required for a message to be sent a defined number of times, for example precisely once, along a ring.

18. Method according to any of claims 1 to 17, **characterized in that** a star coupler (201-209) implements one or more activity rasters (1000) by local clocks, wherein preferably the local clocks of different star couplers (201-209) implementing one or more activity rasters (1000) are synchronized with one another.

19. Network infrastructure (200) for a distributed real-time system, wherein the real-time system comprises two or more computing nodes (101-108) and one or more star couplers (201-209), wherein the computing nodes (101-108) are connected to the star couplers (201-209) by means of bidirectional communication lines (301, 302, 303) and the star couplers (201-209) are connected to one another by bidirectional communication lines (310), and wherein the network infrastructure is formed by the star couplers (201-209) connected by the communication lines (310), and wherein at least some of the messages are sent redundantly, and wherein messages belonging to a message stream have the same identity, wherein, for the redundant transmission of messages in the real-time system, one or more star couplers (201-209) of the network infrastructure (200) is or are configured to perform one or more activity rasters (1000), wherein an activity raster (1000) consists of alternating active phases (502) and rest phases (501), wherein all active phases of an activity raster have the same active phase duration, and wherein all rest phases of an activity raster have the same rest phase duration, and wherein the active phase duration and the rest phase duration of an activity raster may be identical or different, **characterized in that** the star coupler(s) is/are configured to assign each message sent in the network infrastructure, depending on its identity, to precisely one activity raster (1000) so that the messages are sent only in active phases (502) so that a receiver receiving messages detects that the messages are redundant copies of the same message if the receiver receives messages with the same identity within a time interval, which time interval has a duration corresponding to the active phase duration of the activity raster (1000) for messages having this identity.

20. Network infrastructure according to claim 19, **characterized in that** all star couplers (201-209) performing an activity raster (1000) associated with a certain message perform this activity raster (1000) in such a way that the star couplers (201-209) are in an active phase (502) or in a rest phase (501) either in a synchronized manner, that is to say at approximately the same time, or in a manner temporally offset by a defined phase.

21. Network infrastructure according to claim 19 or 20, **characterized in that** a star coupler (201-209) forwards a message that it receives from another star coupler (201-209) only when the moment of receipt and the moment of complete forwarding fall in an active phase (502) of the activity raster (1000) belonging to the message.

22. Network infrastructure according to any of claims 19 to 21, **characterized in that** the length of the active phase (502) in an activity raster (1000) of a message is selected such that it is selected to be at least the maximum possible duration of one-time sending through the network infrastructure (200).

23. Network infrastructure according to any of claims 19 to 22, **characterized in that** the length of the active phase (502) in an activity raster (1000) of a message is selected such that it corresponds at least to the maximum possible temporal offset required by the copies (701, 702) of a redundant message through the network infrastructure over redundant paths (203, 206; 201, 204, 207, 209), or the length of the active phase (502) in an activity raster (1000) of a message is selected such that it corresponds at least to the maximum possible temporal offset required by the redundant copies (801a, 801b) of a message through the network infrastructure in both directions in a ring (201, 203, 206, 209; 201, 204, 207, 209).

24. Network infrastructure according to any of claims 19 to 23, **characterized in that** a star coupler (201-209) forwards precisely one copy of the set of copies of a message that it receives during an active phase (502) of the associated activity raster (1000), wherein preferably a star coupler (201-209) forwards the first copy of the set of copies of a message that it receives during an active phase (502) of the associated activity raster (1000), and wherein preferably
-) a star coupler (201-209) forwards the last copy of the set of copies of a message that it receives during an active phase (502) of the associated activity raster (1000), or
-) a star coupler (201-209) forwards the precisely one copy of the set of copies of a message at a defined moment in the active phase (502) of the associated activity raster (1000), or
-) a star coupler (201-209) forwards the precisely one copy of the set of copies of a message at a configured or configurable time interval following the start of receipt of this copy.

25. Network infrastructure according to any of claims 19 to 24, **characterized in that** one or more star couplers distinguish between two groups of communication lines (310; 301, 302, 303) to which it or they is/are directly connected, wherein the least one star coupler during an active phase (502) of an activity raster (1000) of a message forwards the message only on the communication lines of the first group and during the rest phase (501) of an activity raster (1000) of a message forwards the message only on the communication lines of the second group, wherein preferably the length of the active phase (502) in an activity raster (1000) of a message is selected such that it corresponds at least to the time required for a message to be sent a defined number of times, for example precisely once, along a ring.

26. Network infrastructure according to any of claims 19 to 25, **characterized in that** a star coupler (201-209) implements one or more activity rasters (1000) by local clocks, wherein preferably the local clocks of different star couplers (201-209) implementing one or more activity rasters (1000) are synchronized with one another.

27. Distributed real-time system comprising two or more computing nodes (101-108) and one or more star couplers (201-209), wherein the computing nodes (101-108) are connected to the star couplers (201-209) by means of bidirectional communication lines (301, 302, 303) and the star couplers (201-209) are connected to one another by bidirectional communication lines (310), and wherein a network infrastructure (200) is formed by the star couplers (201-209) connected by the communication lines (310),
**characterized in that**
the network infrastructure (200) is configured according to any of claims 19 to 26 for the redundant transmission of messages.

## Revendications

1. Procédé de transmission redondante de messages dans un système en temps réel réparti, suivant lequel le système en temps réel comprend au moins deux noeuds de calcul (101-108) et un ou plusieurs coupleurs en étoile (201-209), suivant lequel les noeuds de calcul (101-108) sont connectés aux coupleurs en étoile (201-209) au moyen de lignes de communication bidirectionnelles (301, 302, 303) et les coupleurs en étoile (201-209) sont interconnectés par des lignes de communication bidirectionnelles (310), et suivant lequel les coupleurs en étoile (201-209) connectés par les lignes de communication (310) forment une infrastructure de réseau (200), et suivant lequel au moins une partie des messages est envoyée de manière redondante, et suivant lequel des messages qui appartiennent à un flux de messages présentent la même identité,
**caractérisé par le fait que**
une ou plusieurs trames d'activité (1000) sont réalisées par un ou plusieurs coupleurs en étoile (201-209) de l'infrastructure de réseau (200), une trame d'activité (1000) dans chaque cas consistant en phases actives (502) et phases de repos (501) en alternance, toutes les phases actives d'une trame d'activité présentant la même durée de phase active, et toutes les phases de repos d'une trame d'activité présentant la même durée de phase de repos, et la durée de phase active et la durée de phase de repos d'une trame d'activité pouvant être identiques ou différentes, et
chaque message, lequel est envoyé dans l'infrastructure de réseau, selon son identité étant associé à une trame d'activité (1000) exactement par le ou les coupleurs en étoile, et les messages étant envoyés uniquement dans des phases actives (502), de telle sorte qu'un récepteur, lequel reçoit des messages, détecte qu'il s'agit de copies redondantes du même message, lorsque le récepteur reçoit des messages avec la même identité dans un intervalle temporel, lequel intervalle temporel présente une durée qui correspond à la durée de phase active de la trame d'activité (1000) pour des messages ayant cette identité.

2. Procédé selon la revendication 1, **caractérisé par le fait que** tous les coupleurs en étoile (201-209), qui réalisent une trame d'activité (1000) associée à un certain message, réalisent cette trame d'activité (1000) de telle sorte que les coupleurs en étoile (201-209) se trouvent dans une phase active (502) ou dans une phase de repos (501) soit d'une façon synchronisée, à savoir environ simultanément, soit d'une façon décalée dans le temps d'une phase définie.

3. Procédé selon l'une des revendications 1 ou 2, **caractérisé par le fait qu'**un coupleur en étoile (201-209) transfère uniquement un message qu'il reçoit d'un autre coupleur en étoile (201-209) lorsque le moment de réception et le moment de la transmission complète tombent dans une phase active (502) de la trame d'activité (1000) appartenant au message.

4. Procédé selon l'une des revendications 1 à 3, **caractérisé par le fait que** la longueur de la phase active (502) dans une trame d'activité (1000) d'un message est sélectionnée pour être au moins la durée possible maximale de l'envoi en une fois par l'infrastructure de réseau (200).

5. Procédé selon l'une des revendications 1 à 4, **caractérisé par le fait que** la longueur de la phase active (502) dans une trame d'activité (1000) d'un message est sélectionnée de telle sorte qu'elle correspond au moins au décalage dans le temps possible maximal requis par les copies (701, 702) d'un message redondant par l'infrastructure de réseau sur des trajets redondants (203, 206 ; 201, 204, 207, 209), ou la longueur de la phase active (502) dans une trame d'activité (1000) d'un message est sélectionnée de telle sorte qu'elle correspond au moins au décalage dans le temps possible maximal requis par les copies redondantes (801a, 801b) d'un message par l'infrastructure de réseau dans les deux directions d'un anneau (201, 203, 206, 209 ; 201, 204, 205, 209).

6. Procédé selon l'une des revendications 1 à 5, **caractérisé par le fait que** la longueur de la phase de repos (501)d'une trame d'activité (1000) correspond au moins à la longueur de l'imprécision de la synchronisation des horloges locales du système en temps réel réparti.

7. Procédé selon l'une des revendications 1 à 6, **caractérisé par le fait que** la longueur de la phase de repos (501) d'une trame d'activité (1000) est sélectionnée en fonction de la phase active associée (502) de la trame d'activité (1000), dans lequel de préférence la longueur de la phase de repos (501) d'une trame d'activité (1000) est sélectionnée en tant que multiple arithmétique de la phase active associée (502) de la trame d'activité (1000).

8. Procédé selon l'une des revendications 4 à 7, **caractérisé par le fait que** la longueur de la phase active (502) dans une trame d'activité (1000) d'un message est sélectionnée pour être au moins la durée possible maximale de l'envoi en une fois du message ainsi qu'un nombre configuré de répétitions par l'infrastructure de réseau (200).

9. Procédé selon l'une des revendications 1 à 8, **caractérisé par le fait qu'**un coupleur en étoile (201-209) transfère, au moins deux fois, un message ou la copie redondante d'un message qu'il reçoit durant une phase active (502) de la trame d'activité associée (1000), dans lequel de préférence la transmission répétée du message est réalisée uniquement durant la phase active courante (502), et suivant lequel en particulier un intervalle temporel défini est prévu entre deux répétitions.

10. Procédé selon la revendication 9, **caractérisé par le fait que** le nombre des répétitions et/ou l'intervalle temporel entre deux répétitions sont aptes à être configurés.

11. Procédé selon l'une des revendications 1 à 10, **caractérisé par le fait qu'**un coupleur en étoile (201-209) transmet exactement une copie de l'ensemble de copies d'un message qu'il reçoit durant une phase active (502) de la trame d'activité associée (1000), suivant lequel de préférence un coupleur en étoile (201-209) transmet la première copie de l'ensemble de copies d'un message qu'il reçoit durant une phase active (502) de la trame d'activité associée (1000), et suivant lequel de préférence
- un coupleur en étoile (201-209) transmet la dernière copie de l'ensemble de copies d'un message qu'il reçoit durant une phase active (502) de la trame d'activité associée (1000), ou
- un coupleur en étoile (201-209) transmet la exactement une copie de l'ensemble de copies d'un message à un moment dans le temps configuré ou apte à être configuré dans la phase active (502) de la trame d'activité associée (1000), ou
-) un coupleur en étoile (201-209) transmet la exactement une copie de l'ensemble de copies d'un message à un intervalle temporel configuré ou apte à être configuré après le début de la réception de cette copie.

12. Procédé selon la revendication 11, **caractérisé par le fait que** l'intervalle temporel correspond à la durée requise par le coupleur en étoile (201-209) pour décider à quels noeuds de calcul et/ou autres coupleurs en étoile le coupleur en étoile (201-209) doit transmettre le message, ou l'intervalle temporel correspond à la durée de la réception complète de la copie.

13. Procédé selon l'une des revendications 1 à 12, **caractérisé par le fait qu'**un coupleur en étoile (201-209) transmet un sous-ensemble quelconque des copies de l'ensemble de copies d'un message qu'il reçoit durant une phase active (502) de la trame d'activité associée (1000).

14. Procédé selon l'une des revendications 1 à 13, **caractérisé par le fait qu'**un ou plusieurs coupleurs en étoile rejettent des messages qu'ils reçoivent directement depuis un noeud de calcul, lorsque les messages sont reçus dans le coupleur en étoile durant une phase de repos associée au message.

15. Procédé selon l'une des revendications 1 à 14, **caractérisé par le fait qu'**un ou plusieurs coupleurs en étoile rejettent des messages qu'ils reçoivent directement depuis un noeud de calcul, lorsque le message est reçu dans le coupleur en étoile durant une phase active associée au message, mais la transmission de ce message ne peut pas être achevée dans cette phase active.

16. Procédé selon l'une des revendications 1 à 15, **caractérisé par le fait qu'**un ou plusieurs coupleurs en étoile, qui reçoivent des copies redondantes d'un message directement depuis un noeud de calcul, réalisent entre eux un protocole d'accord, et chacun de ces coupleurs en étoile identifie séparément selon ce protocole d'accord au plus une phase active, durant laquelle la ou les copies redondantes du message sont transmises.

17. Procédé selon l'une des revendications 1 à 16, **caractérisé par le fait qu'**un ou plusieurs coupleurs en étoile distinguent deux groupes de lignes de communication (310 ; 301, 302, 303), avec lesquels il est, respectivement, ils sont connecté(s) directement suivant lequel le au moins un coupleur en étoile durant une phase active (502) d'une trame d'activité (1000) d'un message transmet le message uniquement aux lignes de communication du premier groupe et durant la phase de repos (501) d'une trame d'activité (1000) d'un message transmet le message uniquement aux lignes de communication du second groupe, suivant lequel de préférence la longueur de la phase active (502) dans une trame d'activité (1000) d'un message est sélectionnée de telle sorte qu'elle correspond au moins à la durée requise par un message pour être envoyé un nombre défini de fois, par exemple exactement une fois, le long d'un anneau.

18. Procédé selon l'une des revendications 1 à 17, **caractérisé par le fait qu'**un coupleur en étoile (201-209) met en oeuvre une ou plusieurs trames d'activité (1000) par des horloges locales, suivant lequel de préférence les horloges locales de différents coupleurs en étoile (201-209), qui mettent en oeuvre une ou plusieurs trames d'activité (1000), sont synchronisées les unes aux autres.

19. Infrastructure de réseau (200) pour un système en temps réel réparti, suivant laquelle le système en temps réel comprend au moins deux noeuds de calcul (101-108) et un ou plusieurs coupleurs en étoile (201-209), suivant laquelle les noeuds de calcul (101-108) sont connectés aux coupleurs en étoile (201-209) au moyen de lignes de communication bidirectionnelles (301, 302, 303) et les coupleurs en étoile (201-209) sont interconnectés par des lignes de communication bidirectionnelles (310), et suivant laquelle l'infrastructure de réseau est formée par les coupleurs en étoile (201-209) connectés par les lignes de communication (310), et suivant laquelle au moins une partie des messages est envoyée de manière redondante, et suivant laquelle des messages qui appartiennent à un flux de messages présentent la même identité,
**caractérisée par le fait que**
pour la transmission redondante de messages dans le système en temps réel, un ou plusieurs coupleurs en étoile (201-209) de l'infrastructure de réseau (200) est, respectivement sont, configuré(s) pour réaliser une ou plusieurs trames d'activité (1000), une trame d'activité (1000) consistant en des phases actives (502) et des phases de repos (501) en alternance, toutes les phases actives d'une trame d'activité présentant la même durée de phase active, et toutes les phases de repos d'une trame d'activité présentant la même durée de phase de repos, et la durée de phase active et la durée de phase de repos d'une trame d'activité pouvant être identiques ou différentes, et
le ou les coupleurs en étoile (201-209) étant configuré(s) pour affecter chaque message, lequel est envoyé dans l'infrastructure de réseau, selon son identité à exactement une trame d'activité (1000), de telle sorte que les messages sont envoyés uniquement dans les phases actives (502), de telle sorte qu'un récepteur, lequel reçoit des messages, détecte qu'il s'agit de copies redondantes du même message, lorsque le récepteur reçoit des messages avec la même identité dans un intervalle temporel, lequel intervalle temporel présente une durée qui correspond à la durée de phase active de la trame d'activité (1000) pour des messages ayant cette identité.

20. Infrastructure de réseau selon la revendication 19, **caractérisée par le fait que** tous les coupleurs en étoile (201-209), qui réalisent une trame d'activité (1000) associée à un certain message, réalisent cette trame d'activité (1000) de telle sorte que les coupleurs en étoile (201-209) se trouvent dans une phase active (502) ou dans une phase de repos (501) soit d'une façon synchronisée, à savoir environ simultanément, soit d'une façon décalée dans le temps d'une phase définie.

21. Infrastructure de réseau selon l'une des revendications 19 ou 20, **caractérisée par le fait qu'**un coupleur en étoile (201-209) transmet uniquement un message qu'il reçoit d'un autre coupleur en étoile (201-209), lorsque le moment de réception et le moment de la transmission complète tombent dans une phase active (502) de la trame d'activité (1000) appartenant au message.

22. Infrastructure de réseau selon l'une des revendications 19 à 21, **caractérisé par le fait que** la longueur de la phase active (502) dans une trame d'activité (1000) d'un message est sélectionnée pour être au moins la durée possible maximale de l'envoi en une fois par l'infrastructure de réseau (200).

23. Infrastructure de réseau selon l'une des revendications 19 à 22, **caractérisé par le fait que** la longueur de la phase active (502) dans une trame d'activité (1000) d'un message est sélectionnée de telle sorte qu'elle correspond au moins au décalage dans le temps possible maximal requis par les copies (701, 702) d'un message redondant par l'infrastructure de réseau sur des trajets redondants (203, 206 ; 201, 204, 207, 209), ou la longueur de la phase active (502) dans une trame d'activité (1000) d'un message est sélectionnée de telle sorte qu'elle correspond au moins au décalage dans le temps possible maximal requis par les copies redondantes (801a, 801b) d'un message par l'infrastructure de réseau dans les deux directions d'un anneau (201, 203, 206, 209 ; 201, 204, 207, 209).

24. Infrastructure de réseau selon l'une des revendications 19 à 23, **caractérisé par le fait qu'**un coupleur en étoile (201-209) transmet exactement une copie de l'ensemble de copies d'un message qu'il reçoit durant une phase active (502) de la trame d'activité associée (1000), suivant laquelle de préférence un coupleur en étoile (201-209) transmet la première copie de l'ensemble de copies d'un message qu'il reçoit durant une phase active (502) de la trame d'activité associée (1000), et de préférence suivant laquelle
-) un coupleur en étoile (201-209) transmet la dernière copie de l'ensemble de copies d'un message qu'il reçoit durant une phase active (502) de la trame d'activité associée (1000), ou
-) un coupleur en étoile (201-209) transmet la exactement une copie de l'ensemble de copies d'un message à un moment dans le temps défini dans la phase active (502) de la trame d'activité associée (1000), ou
-) un coupleur en étoile (201-209) transmet la exactement une copie de l'ensemble de copies d'un message à un intervalle temporel configuré ou apte à être configuré après le début de la réception de cette copie.

25. Infrastructure de réseau selon l'une des revendications 19 à 24, **caractérisé par le fait qu'**un ou plusieurs coupleurs en étoile distinguent deux groupes de lignes de communication (310 ; 301, 302, 303), avec lesquels il est, respectivement, ils sont connecté(s) directement, suivant laquelle le au moins un coupleur en étoile durant une phase active (502) d'une trame d'activité (1000) d'un message transmet le message uniquement aux lignes de communication du premier groupe et durant la phase de repos (501) d'une trame d'activité (1000) d'un message transmet le message uniquement aux lignes de communication du second groupe, suivant laquelle de préférence la longueur de la phase active (502) d'une trame d'activité (1000) d'un message est sélectionnée de telle sorte qu'elle correspond au moins à la durée requise par un message pour être envoyé un nombre défini de fois, par exemple exactement une fois, le long d'un anneau.

26. Infrastructure de réseau selon l'une des revendications 19 à 25, **caractérisé par le fait qu'**un coupleur en étoile (201-209) met en oeuvre une ou plusieurs trames d'activité (1000) par des horloges locales, suivant laquelle de préférence les horloges locales de différents coupleurs en étoile (201-209), qui mettent en oeuvre une ou plusieurs trames d'activité (1000), sont synchronisées les unes aux autres.

27. Système en temps réel réparti comportant au moins deux noeuds de calcul (101-108) et un ou plusieurs coupleurs en étoile (201-209), suivant lequel les noeuds de calcul (101-108) sont connectés aux coupleurs en étoile (201-209) au moyen de lignes de communication bidirectionnelles (301, 302, 303) et les coupleurs en étoile (201-209) sont interconnectés par des lignes de communication bidirectionnelles (310), et suivant lequel une infrastructure de réseau (200) est formée à partir des coupleurs en étoile (201-209) connectés par les lignes de communication (310),
**caractérisé par le fait que**
pour la transmission redondante de messages, l'infrastructure de réseau (200) est formée selon l'une des revendications 19 à 26.
